## Europäisches Patentamt
## European Patent Office
## Office européen des brevets

(19)

(11) Publication number: **0 008 238**
**B1**

(12) **EUROPEAN PATENT SPECIFICATION**

(45) Date of publication of patent specification: **04.08.82**

(21) Application number: **79301636.1**

(22) Date of filing: **13.08.79**

(51) Int. Cl.³: **G 08 C 15/00,**
**B 60 R 16/02, H 04 L 7/04**

(54) **A multiplex information handling system.**

(30) Priority: **16.08.78 GB 3357878**
**16.08.78 GB 3358578**
**01.02.79 GB 7903489**

(43) Date of publication of application:
**20.02.80 Bulletin 80/4**

(45) Publication of the grant of the patent:
**04.08.82 Bulletin 82/31**

(84) Designated Contracting States:
**AT BE CH DE FR GB IT LU NL SE**

(56) References cited:
**DE - A - 2 433 025**
**DE - A - 2 435 579**
**DE - A - 2 801 122**
**DE - B - 1 273 563**
**FR - A - 2 350 008**
**US - A - 3 755 628**

(73) Proprietor: **WARD & GOLDSTONE LIMITED**
**Frederick Road**
**Salford, M6 6AP (GB)**

(72) Inventor: **Hampshire, Michael John**
**792 Halifax Road**
**Liversedge West Yorkshire (GB)**
Inventor: **Williamson, Jonathan Hugh**
**25 Westbourne Avenue**
**Clifton, Swinton Manchester, M27 2NN (GB)**

(74) Representative: **Downey, William Gerrard et al,**
**WILSON GUNN & ELLIS 41 Royal Exchange Cross Street**
**Manchester, M2 7DB (GB)**

(56) References cited:
**RADIO ELEKTRONICA, May 1979, no. 9 Deventer, NL HINLOPEN: "Symposium auto-elektronica" pages 29—31**

**FREQUENZ, vol. 31, 1977, no. 12, Berlin DE ERDEL et al.: "Glasfaser-Bussysteme zur Signalübertragung in Bordnetzen" pages 364—368.**

Courier Press, Leamington Spa, England.

A multiplex information handling system

This invention relates to an improvement in multiplex information handling systems and more particularly to an improvement in efficiency for a system containing more than one oscillator, and to an improvement in the immunity to noise.

A multiplex information system consists of a plurality of interconnected processing units between which a signal containing digital and/or analogue data usually in the form of electrical or optical pulses is transmitted. If the system is organised so that the transmission is timed from one unit, such as an oscillator, not synchronised with the first such unit, then it is advantageous to ensure that the system does not malfunction unless the frequency of the two oscillators is significantly different, for example in excess of 25%. At the same time, bandwidth must be efficiently used so that the maximum transmitted frequency is as low as possible in order to minimise the radiation of radio interference.

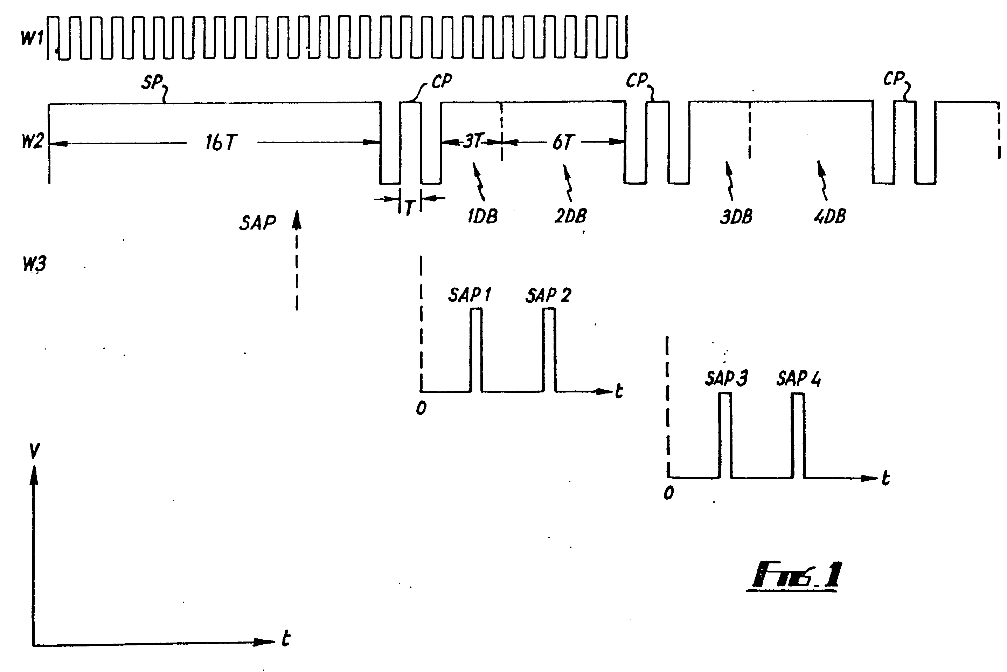

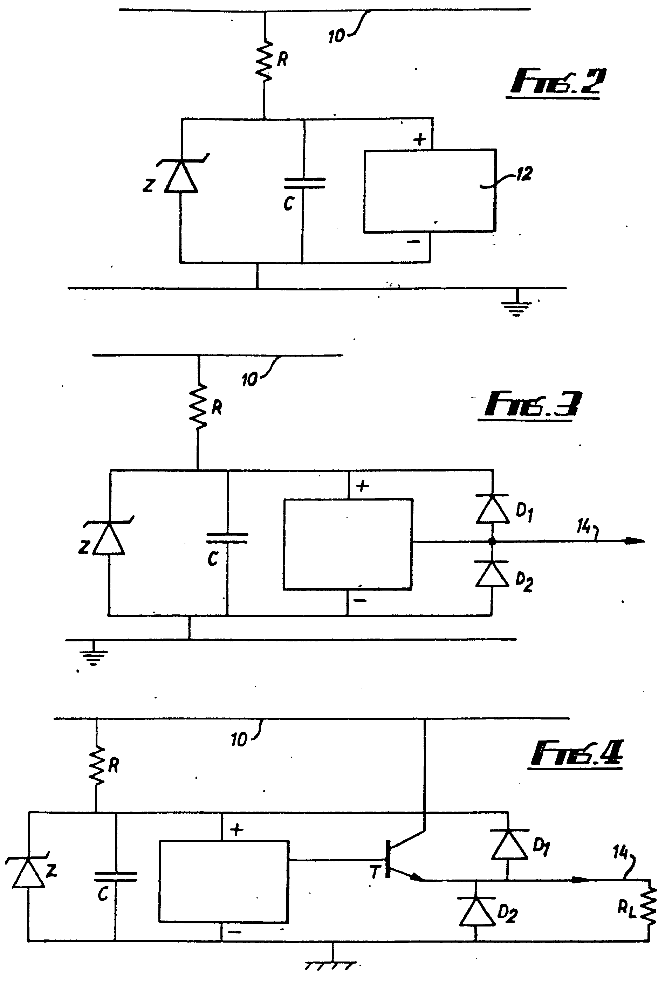

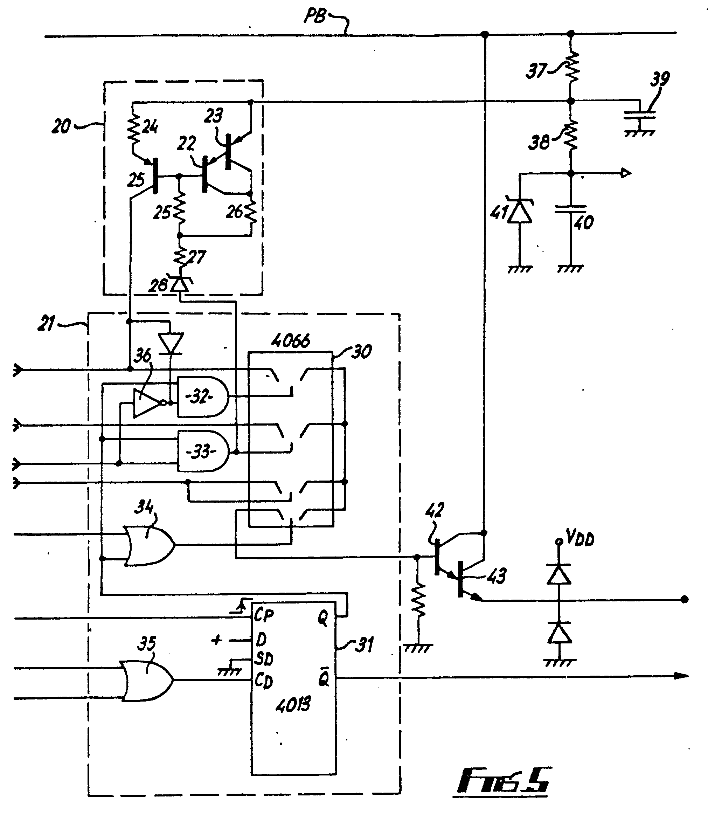

Virtually all known multiplex systems utilize clock pulses of one kind or another usually to sample transmitted packets of data at predetermined times. Figure 5 of German Offenlegungschrift 2,433,025 and Figure 2 of German Offenlegungschrift 2,435,579 show examples of this. In some cases data pulses are sandwiched between adjacent clock pulses in order to locate them in time. Examples of this approach are shown in Figure 3 of the specification of French Patent No. 2,350,008 and in Figure 3 of the specification of German Auslegeschrift 1,273,563. In none of these specifications, however, is provision automatically made in the form of the data transmitted itself for enabling slight differences between the frequency of a clock in a transmitter and the frequency of a clock in a transmitter to be catered for in order to avoid a corruption of the data signal transmitted.

According to the present invention, there is provided a multiplex information handling system comprising a plurality of transmitters and a plurality of receivers all interconnected by a signal bus, pieces of control equipment connected to the transmitters and pieces of equipment adapted to be controlled by the control equipment connected to the receivers each transmitter and receiver comprising timing means including an oscillator, the timing means of each transmitter being operative to produce clock pulses, each transmitter comprising means controlled by the corresponding timing means for generating and sequentially transmitting after transmission of a clock pulse data bits representing the operational state of control equipment connected thereto characterised in that the data bits have progressively increasing duration the further they are away from the associated clock pulse and each receiver comprising sampling means controlled by the corresponding timing means fro sampling the data bits received and producing control signals for connected equipment in dependence upon the result of the sampling.

In order that the invention may be more clearly understood several embodiments of the invention will now be described, by way of example, with reference to the accompanying drawing in which:—

Figure 1 shows a timing diagram for a multiplex information handling system having a single signal bus,

Figures 2, 3 and 4 respectively show circuit diagrams of three noise suppression systems for a multiplex information handling system, and

Figure 5 shows a circuit diagram of an output stage for a transmitter of the multiplex information handling system of Figure 1.

Referring to Figure 1, the uppermost waveform W1 represents the repetitive pulses of the oscillator of a transmitter. Time (t) is plotted on the abscissa against voltage V on the ordinate. The oscillator frequency is $1/T$ and T is the duration of each of the clock pulses forming part of the next waveform W2. This transmission waveform W2 begins with a synchronising pulse SP which is 16T in duration and exceeds in length the length on any other pulse transmitted along the signal bus of the system. This synchronising pulse is followed by a clock pulse CP. The clock pulse itself is a logic high and is preceded and succeeded by a logic low each of T duration to minimize radio interference. The complete clock format is therefor low for T, high for T and then low for T again. First and second data bits 1DB and 2DB follow the first clock pulse, the first bit being of 3T duration and the second being of 6T duration. A further clock pulse format follows itself followed by third and fourth data bits 3DB and 4DB respectively.

Waveforms W3, W4 and W5 respectively indicate the time at which the length of the synchronising pulse is tested, the times the first and second data bits are sampled and the times the third and fourth data bits are sampled by appropriate sampling pulses SAP to SAP4 in the receivers receiving the transmission. Zero time for the sample pulses starts on the falling edge of corresponding clock pulses.

Thus with the above described transmission format the length of the synchronising pulse sent once at the start of the transmission from a transmitter is greater than the longest continuous pulse possible arising from a combination of data bits by sufficient margin to enable it to be recognised by a receiver which has an oscillator the frequency of which is within the desired tolerance, of for example 25%, providing the oscillator in the transmitter also satisfies the desired tolerance. The synchronising pulse clears all counters in the receiver. The length of the synchronising pulse may also be used to identify the transmitter type it issues from, different length pulses being used for different transmitter types. The clock pulse is as short as possible again to facilitate recognition. The relative positions of the various pulses also assists in enabling them to be identified.

No time is allowed between the falling edge of the first data bit and the rising edge of the second data bit following the clock pulse and as the timing of the second data bit after a clock pulse requires a greater restraint on the tolerance between oscillator frequencies than the first bit, the second bit is made longer in duration.

Because the two oscillators, one in the transmitter and the other in the receiver, are not synchronised the timing may fluctuate by up to one oscillator bit, even if they were of the same frequency. Taking this into account, if the first data bit is three oscillator bits and the second data bit is six oscillator bits as described above, then the 25% tolerance on timing is easily achieved.

Following the receipt of a transmission various items of operational equipment forming part of, or controlled by, the multiplex information handling system can be expected to be switched to change their operational state. Such switching can cause a noisy environment which could result in a following transmission being adversely affected. To avoid this happening further transmission or reception is inhibited by generating a post transmission high on the signal bus for a limited period when any output of any receiver is about to change state. It may also be advantageous to reset the timing means of each receiver to precisely initiate the timing of an event. This may be done, for example, by making the resetting coincident with a selected change in the logic state on the signal bus.

Analogue data is transmitted by means of the height of the voltage pulses. Corruption of data transmitted in this way may result from variation in the power supply voltage on the power bus. This may be prevented by providing each transmitter with an output driver stage and supply filter which incorporates a constant current source. Such a circuit is shown in Figure 5. Referring to Figure 5, the output driver stage and supply filter of the transmitter comprises a current generator 20 and logic circuitry 21. The current generator comprises two PNP transistors 22 and 23 connected in cascade and a further PNP transistor 24a connected with associated resistors 24, 25, 26 and 27 and zener diode 28. The logic circuitry 21 comprises two integrated circuits 30 and 31. The pins of logic circuits 30 and 31 are fed through a selection of logic gates comprising two AND gates 32 and 33, two OR gates 34 and 35 and a NOT gate 36. The current generator is fed from the power bus PB through a supply filter comprising two resistors 37 and 38, two capacitors 39 and 40 and a zener diode 41. The output from the circuit is through two cascaded PNP transistors 42 and 43 to the signal bus.

The above described multiplex information handling systems are particularly suitable for use in vehicles.

The power rail in vehicles is very susceptible to electrical noise arising from surges of current and back emfs when switching loads. Any electronic circuit fed from this power rail must withstand this noisy voltage fluctuation of the power rail without malfunction.

Figures 2, 3 and 4 shows the circuit diagrams of three possible noise suppression systems. Equivalent elements on these figures have been given the same reference numerals. Referring to Figure 2 a power bus 10 is fed to an electronic circuit 12 through a resistor R. A capacitor C and zener diode Z are connected in parallel with the positive and ground terminals of the electronic circuit. The circuit is designed so that the mean current consumption is small which is easily done using complementary electronics such as CMOS thereby ensuring that the resistor R can be significantly large without dropping too great a voltage. The capacitor C must be large enough to provide high transient currents to the electronic circuit with minimal voltage change across the capacitor terminals. The capacitor also supplies power to the circuit in the event that the voltage of the power bus momentarily drops due to the presence of noise. If the power bus 10 carries a large positive pulse arising from the breaking of an inductive circuit, then the zener diode Z clamps the voltage across the electronic circuit to the zener voltage. In practice the zener diode will have a finite slope resistance, r, and a positive noise voltage will be attenuated by $r/(r + R)$. Again using a resistor R with a significantly large value provides good circuit protection.

Other parts of the electronic circuit can be diode clamped to the positive and negative terminals of the electronic circuit which have been isolated from noise on the power bus 10 as outlined above. If electrical signals are to be transmitted along a signal bus as used in an electronic multiplexing wiring system, for example, then the signal bus will be susceptible to noise by capacitive coupling to the power bus. If the signal bus 14 is connected to the positive and negative terminals of the noise protected electronic circuit by two diodes D1 and D2 as shown in Figure 3, then D1 will conduct if the signal bus potential rises significantly above the potential of the positive terminal, and D2 will conduct if the signal bus potential falls significantly below that of the negative terminal. By these means the potential of the signal bus 14 is prevented from passing significantly outside the voltage range set by the value of potentials at the positive and negative terminals.

Figure 4 illustrates the driving of an electrical output from the electronic circuit 12. If the output, by way of example, is considered as a signal bus of a multiplexed wiring system then the signal bus can be driven by a transistor T in an emitter follower output stage. The collector of the transmitter T can be taken directly to the power bus 10, but the signal to the base is derived from the electronic circuit 12 which is noise protected as described with reference to Figure 1. The potential of the emitter of transistor and hence of the signal bus 12 follows that of the base which is noise protected, and consequently noise voltages on the power bus 12 and hence on the collector are of minimal significance. Using an emitter follower gives a single ended drive, and it is necessary to provide a pull down resistor or emitter load, $R_L$. This load $R_L$ can have a very low value, because the current through it does not pass through the resistor R. If $R_L$ is very low then noise potentials induced on the signal bus by capacitive coupling with the power bus 10 is greatly minimised.

The signal bus 14 is susceptible to pick-up from sources of radiative noise such as sparks, for example, especially if the impedance defined by the pull down resistor $R_L$, referred to in the embodiment of Figure 4 is large. If the power bus 10 and signal bus 14 are combined in one co-axial cable such that the outer carries the power whilst the inner carries the signal, then the signal bus will be screened from radiative pick up by the power bus. A further advantage of a co-axial construction is that the voltage pulses on the signal bus will be prevented from radiating radio interference by the presence of the outer screen which is clamped at very low impedance to the d.c. power supply of the vehicle.

**Claims**

1. A multiplex information handling system comprising a plurality of transmitters and a plurality of receivers all interconnected by a signal bus (14), pieces of control equipment connected to the transmitters and pieces of equipment adapted to be controlled by the control equipment connected to the receivers each transmitter and receiver comprising timing means including an oscillator, the timing means of each transmitter being operative to produce clock pulses (CP), each transmitter comprising means controlled by the corresponding timing means for generating and sequentially transmitting after transmission of a clock pulse data bits (DB) representing the operational state of control equipment connected thereto characterised in that the data bits have progressively increasing duration (3T, 6T) the further they are away from the associated clock pulse and each receiver comprising sampling means controlled by the corresponding timing means for sampling the data bits received and producing control signals for connected equipment in dependence upon the result of the sampling.

2. A multiplex information handling system as claimed in Claim 1, characterised in that each transmitter is operative to produce a start pulse (SP) at the beginning of each transmission which is longer than any other combination of directly adjacent data pulses in the transmission so that it can be recognised as such by a receiver receiving the transmission.

3. A multiplex information handling system as claimed in Claim 2, characterised in that each transmitter is operative to produce a start pulse (SP) having a length which is dependent upon the transmitter type from which it issues whereby a receiver receiving a transmission can identify that type.

4. A multiplex information handling system as claimed in any preceding claim, characterised in that the timing means are adapted to be reset in the event of a selected transition in the logic state on the signal bus (16).

5. A multiplex information handling system as claimed in any preceding claim, characterised in that means are provided for applying a signal to the signal bus to inhibit transmission or reception.

6. A multiplex information handling system as claimed in any preceding claim, characterised in that a power bus (10) is provided interconnecting the receivers and transmitters, each transmitter incorporates means for protecting the transmission of analogue data against variation in the voltage on the power bus.

7. A multiplex information handling system as claimed in Claim 6, characterised in that the means for protecting incorporates a constant current source.

8. A multiplex information handling system as claimed in any preceding claim, characterised in that each transmitter or receiver is fed from the power bus (10) via a resistor and a capacitor and zener diode are connected in parallel with the circuit.

9. A multiplex information handling system as claimed in Claim 8, characterised in that the signal bus is clamped to the positive and negative terminals of the transmitter or receiver by respective diodes.

10. A multiplex information handling system as claimed in Claim 9, characterised in that the base emitter junction of a transistor is connected in the signal bus, the emitter of the transistor being connected to the junction of the two diodes and the collector to the power bus.

**Revendications**

1. Système de traitement d'informations multiplex comprenant une série d'émetteurs et de récepteurs tous interconnectés par un bus de signaux 14, des éléments d'équipement de contrôle connectés aux émetteurs et des éléments d'équipement agencés pour être commandés par l'équipement de contrôle connecté aux récepteurs, chaque émetteur et récepteur comprenant des moyens de réglage dand le temps comportant un oscillateur, les moyens de réglage de chaque émetteur étant agencés pour délivrer des impulsions d'horloge CP, chaque émetteur comprenant des moyens commandés par les moyens de réglage correspondants pour engendrer et transmettre séquentiellement, après émission d'une impulsion d'horloge, des bits de données DB représentant l'état fonctionnel de l'équipement de contrôle y connectés, caractérisé par le fait que les bits de données ont une durée progressivement croissante (3T, 6T) au fur et à mesure qu'ils sont éloignés de l'impulsion d'horloge associée et chaque récepteur comprenant des moyens d'échantillonnage commandés par les moyens de réglage correspondants pour échantillonner les bits de données reçus et délivrer des signaux de commande pour l'équipement connecté en fonction du résultat de l'échantillonnage.

2. Système de traitement d'informations multiplex selon la revendication 1, caractérisé par le fait que chaque émetteur est agencé pour délivrer une impulsion de départ SP au début de chaque émission qui est plus longue que toute autre combinaison d'impulsions de données directement adjacentes dans l'émission afin qu'il puisse être reconnu en tant que tel par un récepteur recevant l'émission.

3. Système de traitement d'informations multiplex selon la revendication 2, caractérisé par le fait que chaque émetteur est agencé pour produire une impulsion de départ SP ayant une durée qui dépend du type d'émetteur d'où elle est issue, un récepteur recevant une émission pouvant identifier ce type.

4. Système de traitement d'informations multiplex selon l'une des revendications 1 à 3, caractérise par le fait que les moyens de réglage sont agencés pour être recalés en cas d'émission sélective à l'état logique sur le bus des signaux 14.

5. Système de traitement d'informations multiplex selon l'une des revendications 1 à 4, caractérisé par le fait que ces moyens sont destinés à appliquer un signal au bus des signaux pour inhiber l'émission ou la réception.

6. Système de traitement d'informations multiplex selon l'une des revendications 1 à 5, caractérisé par le fait qu'un bus d'alimentation 10 est prévu pour interconnecter les récepteurs et les émetteurs, chaque émetteur comprenant des moyens pour protéger l'émission de données analogiques contre des variations de tension sur le bus d'alimentation.

7. Système de traitement d'informations multiplex selon la revendication 6, caractérisé par le fait que les moyens de protection comprennent une source de courant constant.

8. Système de traitement d'informations multiplex selon l'une des revendications 1 à 7, caractérisé par le fait que chaque émetteur ou récepteur est alimenté par le bus d'alimentations 10 par l'intermédiaire d'une résistance, et un condensateur et une diode zener sont branchés en parallèle sur le circuit.

9. Système de traitement d'informations multiplex selon la revendication 8, caractérisé par le fait que le bus des signaux est connecté aux bornes positives et négatives de l'émetteur ou du récepteur par des diodes respectives.

10. Système de traitement d'informations multiplex selon la revendication 9, caractérisé par le fait que la jonction base émetteur d'un transistor est connectée dans le bus des signaux, l'émetteur du transistor étant connecté à la jonction de deux diodes et le collecteur au bus d'alimentation.

**Patentansprüche**

1. Multiplexinformationsverarbeitungssystem mit mehreren Sendern und mehreren Empfängern, die alle über eine Signalhauptleitung (14) verbunden sind, mit Einrichtungen von Steueranordnungen, die mit den Sendern verbunden sind, und mit Einrichtungen, die von den Steueranordnungen gesteuert werden können und mit den Empfängern verbunden sind, wobei jeder Sender und jeder Empfänger eine Zeitschaltung mit einem Oszillator umfaßt, die Zeitschaltung jedes Senders zur Erzeugung von Taktimpulsen (CP) wirksam ist, jeder Sender durch die entsprechende Zeitschaltung gesteuerte Einrichtungen zum Erzeugen und anschließenden Übertragen von Informationsbits (DB) nach der Übertragung eines Taktimpulses aufweist, welche Informationsbits den Betriebszustand der damit verbundenen Steueranordnung darstellt, dadurch gekennzeichnet, daß die Informationsbits progressiv zunehmende Dauer (3T,6T) haben je weiter sie von dem zugeordneten Taktimpuls entfernt sind und jedet Empfänger hat Abtasteinrichtungen, die von der entsprechenden Zeitschaltung gesteuert sind, um die empfangenen Informationsbits abzutasten und in Abhängigkeit des Ergebnisses der Abtastung für die angeschlossene Anordnung Steurerimpulse zu erzeugen.

2. Multiplexinformationsverarbeitungssystem nach Anspruch 1, dadurch gekennzeichnet, daß jeder Sender am Beginn jeder Übertragung einen Startimpuls (SP) erzeugen kann, der länger ist als jegliche andere Kombination von direkt benachbarten Datenimpulsen in der Übertragung, so daß diese also solche von die Übertragung aufnehmenden Empfänger erkannt werden kann.

3. Multiplexinformationsverarbeitungssystem nach Anspruch 2, dadurch gekennzeichnet, daß jeder Sender einen Startimpuls (SP) erzeugen kann, der eine Länge hat, die von der Sendertype abhängt, von der er abgegeben wird, wodurch der die Übertragung aufnehmende Empfänger diese Type identifizieren kann.

4. Multiplexinformationsverarbeitungssystem nach einem der vorhergehenden Ansprüche, dadurch gekennziechnet, daß die Zeitschaltungen rückgesetzt werden können in Falle eines ausgewählten Überganges in den logischen Zustand auf der Signalhauptleitung (14).

5. Multiplexinformationsverarbeitungssystem nach einem der vorhergehenden Ansprüche, dadurch gekennzeichnet, daß Anordnungen vorgesehen sind, um der Signalhauptleitung ein Signal zuzuführen und so die Übertragung oder den Empfang zu unterbinden.

6. Multiplexinformationsverarbeitungssystem nach einem der vorhergehenden Ansprüche, dadurch gekennzeichnet, daß eine Krafthauptleitung (10) vorgesehen ist, die die Empfänger und Sender miteinander verbindet, wobei jeder Sender Anordnungen besitzt, um die Übertragung von Analogdaten bei Spannungsänderungen auf der Krafthauptleitung zu schützen.

7. Multiplexinformationsverarbeitungssystem nach Anspruch 6, dadurch gekennzeichnet, daß die Anordnung zum Schützen eine konstante Stromquelle besitzt.

8. Multiplexinformationsverarbeitungssystem nach einen der vorhergehenden Ansprüche, dadurch gekennzeichnet, daß jeder Sender oder Empfänger von fer Krafthauptleitung (10) über einen Widerstand gespeist wird und ein Kondensator und eine Zenerdiode parallel zur Schaltung liegen.

9. Multiplexinformationsverarbeitungssystem nach Anspruch 8, dadurch gekennzeichnet, daß die Signalhauptleitung an die positiven und negativen Anschlüsse des Senders oder Empfängers über entsprechende Dioden angeklemmt ist.

10. Multiplexinformationsverarbeitungssystem nach Anspruch 9, dadurch gekennzeichnet, daß die Verbindungsstelle von Basis und Emitter eines Transistors an die Signalhauptleitung angeschlossen ist, daß der Emitter des Transistors an die Verbindungsstelle der beiden Dioden und der Kollektor an die Krafthauptleitung angeschlossen sind.

W1

W2  SP  CP  CP  CP

16T  3T  6T

T  1DB  2DB  3DB  4DB

W3  SAP

SAP 1  SAP 2

0  t

V

SAP 3  SAP 4

0  t

t

Fig.1

0 008 238

0 008 238

_**Fig.2**_

_**Fig.3**_

_**Fig.4**_

2

0 008 238

PB

4066  30

4013

31

42

43

VDD

FIG.5

3